# EUROPEAN PATENT APPLICATION

(11) **EP 3 996 006 A1**
(43) Date of publication of application: **11.05.2022**
(21) Application number: 21204506.6
(22) Date of filing: 25.10.2021
(51) Int. Cl.: G06N 3/08, G06N 3/04, G06N 20/00

(54) **DEBATER SYSTEM FOR COLLABORATIVE DISCUSSIONS BASED ON EXPLAINABLE PREDICTIONS**

(30) Priority: 06.11.2020 US 202063110393 P; 21.01.2021 US 202117153902
(71) Applicant: NEC Laboratories Europe GmbH, 69115 Heidelberg (DE)
(72) Inventor: Lawrence, Carolin, 69115 Heidelberg (DE); Sztyler, Timo, 69115 Heidelberg (DE)
(74) Representative: Ullrich & Naumann PartG mbB

(57) **Abstract**

Iterative artificial-intelligence (AI)-based prediction methods and systems are provided. The method may include receiving a dataset of knowledge, processing the dataset of knowledge to produce one or more predictions, one or more explanations corresponding to the one or more predictions, and one or more output options, selecting, using an AI algorithm, an output option from the one or more output options, and presenting the selected output option to a user, the selected output option including a prediction and an explanation of the prediction.

## Description

### FIELD

Embodiments relate to methods and systems for providing predictions, and more particularly to artificial-intelligence (AI)-based systems and methods for providing predictions with explanations optimized to enhance user understanding of the predictions.

### BACKGROUND

When AI systems, such as neural networks, infer new knowledge by making predictions, human users can often not understand why a prediction was made. Without understanding why a prediction was made, the human user may not trust the prediction. Recently, methods have been developed to explain why a prediction has been made. However, depending on the context, the situation or the user, some explanations will be better than others.

Accordingly it is desirable to provide systems and methods that optimize selection and presentation predictions and explanations of predictions to better convince a user of the veracity of the prediction.

### SUMMARY

The present embodiments provide systems and method for providing predictions and explanations. According to an embodiment, an iterative artificial-intelligence (AI)-based prediction method is provided, wherein the method may include receiving a dataset of knowledge, processing the dataset of knowledge to produce one or more predictions, one or more explanations corresponding to the one or more predictions, and one or more output options, selecting, using an AI algorithm, an output option from the one or more output options, and presenting the selected output option to a user, the selected output option including a prediction and an explanation of the prediction.

### BRIEF DESCRIPTION OF THE DRAWINGS

Embodiments of the present invention will be described in even greater detail below based on the exemplary figures. The invention is not limited to the exemplary embodiments. All features described and/or illustrated herein can be used alone or combined in different combinations in embodiments of the invention. The features and advantages of various embodiments will become apparent by reading the following detailed description with reference to the attached drawings which illustrate the following:
**FIG. 1** illustrates a debater system and data flow architecture according to an embodiment.
**FIG. 2** is a block diagram of a processing system, according to an embodiment.

### DETAILED DESCRIPTION

The present embodiments address the problem of which explanation to choose and how to optimize presentation of an explanation of the prediction in order to convince the user of the truthfulness of the prediction. In certain embodiments, by iteratively discussing the prediction and different explanations with the user, the user can collaborate more effectively with the overall system in order to better leverage the predictions. The present embodiments also provide a method and system which engage in a collaborative debate, where the system provides predictions with explanations and discusses these with the user. The AI system takes the user's replies into account in order to update its own understanding and formulate a counter-argument. Such a two-way debate allows the AI system to produce better predictions and overall it enables the user to better utilize AI predictions.

According to an embodiment an iterative artificial-intelligence (AI)-based prediction method is provided, wherein the method includes receiving a dataset of knowledge, processing the dataset of knowledge to produce one or more predictions, one or more explanations corresponding to the one or more predictions, and one or more output options, selecting, using an AI algorithm, an output option from the one or more output options, and presenting the selected output option to a user, the selected output option including a prediction and an explanation of the prediction.

According to an embodiment, the one or more output options each includes at least one of the one or more predictions and at least one of the one or more explanations.

According to an embodiment, the presenting includes generating an image or text that represents a relation between the at least one of the one or more predictions and the at least one of the one or more explanations.

According to an embodiment, the processing the dataset of knowledge to produce one or more predictions includes processing the dataset of knowledge using a neural network having weights trained with a stochastic gradient descent (GSD) using the dataset of knowledge to produce the one or more predictions and calculate a score for each of the one or more predictions.

According to an embodiment, the processing the dataset of knowledge to produce one or more explanations includes processing the dataset of knowledge the one or more predictions and the scores for each of the one or more predictions to derive the one or more explanations.

According to an embodiment, the processing the dataset of knowledge to produce one or more output options includes processing the one or more derived explanations and the one or more predictions to derive relations between the one or more derived explanations and the one or more predictions and produce the output options, each output option including a relation between a derived explanation and a prediction.

According to an embodiment, the selecting, using an artificial intelligence algorithm, an output option includes: processing the one or more predictions, the one or more derived explanations and the one or more output options using a neural network to calculate a score for each of the one or more output options; and selecting, based on a selection policy and the score for each of the one or more output options, one of the one or more output options to be presented to the user.

According to an embodiment, the method further includes receiving a reply including feedback information from the user; and processing the feedback information to determine a new or revised output option for presentation to the user.

According to an embodiment, the processing the feedback information to determine a new or revised output option for presentation to the user includes: processing the feedback information to extract new knowledge; adding the new knowledge to the dataset of knowledge; and calculating a feedback score for the feedback information.

According to an embodiment, the steps of processing and selecting are updated based on the feedback score.

According to an embodiment, the presenting the selected output option to a user includes displaying a visualization of a relation between the prediction and the explanation and/or generating a natural language sentence that includes the prediction, the explanation and the relation.

According to an embodiment, an iterative artificial-intelligence (AI)-based prediction system is provided that includes one or more processors, and a memory storing instructions, which when executed by the one or more processors cause the system to: receive a data set of knowledge, process the dataset of knowledge to produce one or more predictions, one or more explanations corresponding to the one or more predictions, and one or more output options, select, using an AI algorithm, an output option from the one or more output options, and present the selected output option to a user on a display device, the selected output option including a prediction and an explanation of the prediction.

According to an embodiment, the instructions to process include instructions to: process the dataset of knowledge using a neural network having weights trained with a stochastic gradient descent (GSD) using the dataset of knowledge to produce the one or more predictions and calculate a score for each of the one or more predictions; process the dataset of knowledge the one or more predictions and the scores for each of the one or more predictions to derive the one or more explanations; and process the one or more derived explanations and the one or more predictions to derive relations between the one or more derived explanations and the one or more predictions and produce the output options, each output option including a relation between a derived explanation and a prediction; and wherein the instructions to select include instructions to: process the one or more predictions, the one or more derived explanations and the one or more output options using a neural network to calculate a score for each of the one or more output options; and select, based on a selection policy and the score for each of the one or more output options, one of the one or more output options to be presented to the user.

According to an embodiment, the instructions further include instructions, which when executed by the one or more processors, cause the system to: receive a reply including feedback information from the user; and process the feedback information to determine a new or revised output option for presentation to the user, by processing the feedback information to extract new knowledge; adding the new knowledge to the dataset of knowledge; and calculating a feedback score for the feedback information, wherein the feedback score is used to update processing and selecting in a next iteration.

According to an embodiment, a tangible, non-transitory computer-readable medium is provided that includes instructions stored thereon which, upon being executed by one or more processors, alone or in combination, provide for execution of any iterative artificial-intelligence (AI)-based prediction method as described herein.

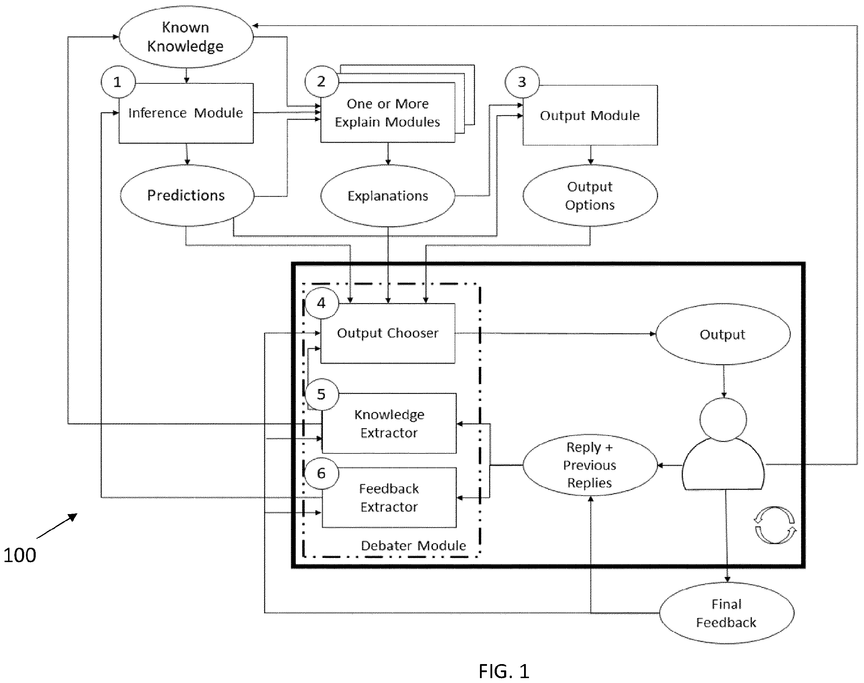

**FIG. 1** illustrates a system 100 and an associated process flow according to an embodiment. In an embodiment, system 100 includes an inference module 1, one or more explanation modules 2, and an output module 3. The inference module 1 is configured to receive given, previously known knowledge as input, and based on this knowledge, make new predictions. The inference module 1 may include a neural network, e.g., a neural network having weights trained with a stochastic gradient descent (SGD) using the known knowledge. In an embodiment, inference module 1 takes the input and produces one or more predictions. By running the input through the inference module 1, the module assigns a score to each prediction. The inference module 1 produces as output one or more predictions and the score that the inference module ascribes to each prediction.

The one or more explanation modules 2 are configured to take one or more predictions (and scores) as input and derive one or more explanations. While producing explanations, the explanation modules 2 may modify and/or query the inference module 1. Furthermore, the explanation modules 2 also have access to the set of known knowledge that was used to train the inference module 1. An example of an explanation could be, for a given prediction, to return the known knowledge which most influenced the inference module to produce the prediction. To derive this explanation, an explanation module would for example modify the inference module and see how the scores of predictions and the known knowledge change. An example of the operation an explanation module can be found in Lawrence et al., 2021 (Explaining Neural Matrix Factorization with Gradient Rollback. Carolin Lawrence, Timo Sztyler, Mathias Niepert. 2021. Accepted at 35th AAAI Conference on Artificial Intelligence (AAAI)*.* (hereinafter "Lawrence et al., 2021"), which is hereby incorporated by reference.

The output of the inference module 1 (i.e., predictions) and the output of the explanation module(s) 2 (i.e., derived explanations) are provided as input to output module 3. Output module 3 is configured to produce a set of output options. These output options may include different choices on how to display a pair of prediction and explanation to a human user (e.g. as an image). Examples of possible outputs could be: (a) given predictions and explanations an image is generated that visualizes the relation between predictions and explanations; (b) a natural language sentence is generated which can be presented or read out. The output options may be presented visually, e.g., in the form of images or text, or audibly, tactilely, or otherwise, depending on the display device used.

All three output information elements, that is, predictions, explanations and output options, are provided to a debater module. For example, in an embodiment, the debater module includes an output chooser 4, a knowledge extractor 5 and a feedback extractor 6 as shown in **FIG. 1****.** Output chooser 4 may include a neural network, e.g., a neural network that can be updated using any gradient-based optimizer (e.g. SGD or Adam) or other optimizer. In an embodiment, output chooser 4 is configured to ascribe a score to each output option, e.g., where a better score may indicate that showing the output option to the human user(s) will more likely convince the user of the truthfulness of the prediction. In an embodiment, to ascribe a score, each output option is given to the output chooser, and for each output option, the output chooser produces a score. A policy of the output chooser is used to decide which output is shown to the human user. Example policies include sampling from a probability distribution derived from the score of all output options or choosing the output option with the best score. The decided-upon output may then be presented to the user as output, e.g., provided on a display screen or other display device for access by a user. Example display devices may include monitors or display screens, printers, tactile implements (e.g., vibration elements), speakers (e.g., for text-to-audio implementations), etc.

After the user has accessed the output, if the user is not fully convinced by the initial output, the system will take verbal and/or non-verbal replies into account and counter the user's arguments by choosing a new output using knowledge extractor 5 and feedback extractor 6. In an embodiment, feedback processing to determine a revised output is done in the following manner. A user's reply, e.g., verbal and/or non-verbal reply, along with any other previous replies, are sent to two modules: the knowledge extractor 5 and the feedback extractor 6. Knowledge extractor 5 is configured to extract any new knowledge that can be found in the user's reply. One possible knowledge extractor includes the information extraction system found in Zhang et al. 2020 (Rapid Adaptation of BERT for Information Extraction on Domain-Specific Business Documents, Ruixue Zhang et al., ArXiv, 2020), which is hereby incorporated by reference, wherein given the user's reply the knowledge that is found in the reply is extracted. If this extracted knowledge is not yet in the set of known knowledge, it is added to the set of known knowledge and the inference module 1 may be updated, e.g., using a gradient-based optimiser and this newly extracted knowledge. Feedback extractor 6 is configured to convert the user reply into a feedback score, which can be any real-valued number. Possible options for the feedback extractor include: 1. A likert scale is presented to the user and the user selects a value; 2. The user's reply is given to a Natural Language Processing system that can assign a score regarding how positive or negative the sentiment may be. Using the feedback score, both inference module 1 and output chooser 4 are updated. To update inference module 1, in an embodiment, the prediction(s) that were present in the chosen output are updated using reinforcement learning. For example, the predictions' scores could be reweighted by the feedback score(s). The output chooser 4 may also be updated using reinforcement learning based on the feedback score(s) and the chosen output. For the output chooser *π*, given an output *o*, a feedback score *δ* and the weights w of the output chooser, the output chooser could, for example, be updated using the REINFORCE update found in Williams, 1992 (Simple statistical gradient-following algorithms for connectionist reinforcement learning. Ronald J. Williams. 1992. Accepted at Machine Learning, 8(3-4), Springer.), which is incorporated herein by reference: ← w + η∇*_{w}* log *π_{w}* (o) · δ, where *η* is a chosen learning rate and ∇*_{w}*o is the gradient of o with regards to the parameter w and · denotes multiplication. The same could be done for the inference module *µ* given its weights *w'* the prediction *p*: *w'* <- *w'* + η∇*_{w}*, log *µ_{w},* (p) · δ.

After the update, inference module 1 may be rerun (or re-executed) to produce new predictions, which may be processed to produce new explanations and output options using explanation module(s) 2 and output module 3 as described herein. Output chooser 4 may then choose either another output option from the old set of output options or from the new set of output options and this output may be presented to the user(s). These steps may be iteratively called as the human user(s) interact with the system, e.g., until the end of interaction is indicated by a human user or the by the debater module.

Once the interaction stops, the human user may or may not provide a final feedback which can be given at any point in the future. This final feedback can again be taken by the system in order to update the known knowledge, as well as the various modules including inference module 1 and output chooser 4 in the same manner as described previously.

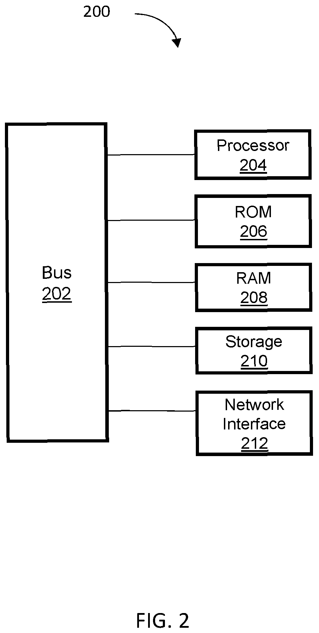

**FIG. 2** is a block diagram of a processing system 200 according to an embodiment. The processing system 200 can be used to implement the protocols, devices, mechanisms, systems and methods described above and herein. For example, each functional module may include a processing system 200, or two or multiple modules may be implemented by a processing system 200. A processing system 200 may include a processor 204, such as a central processing unit (CPU) of a computing device or a distributed processor system. The processor 204 executes processor-executable instructions for performing the functions and methods described above. In embodiments, the processor executable instructions are locally stored or remotely stored and accessed from a non-transitory computer readable medium, such as storage 210, which may be a hard drive, cloud storage, flash drive, etc. Read Only Memory (ROM) 206 includes processor-executable instructions for initializing the processor 204, while the random-access memory (RAM) 208 is the main memory for loading and processing instructions executed by the processor 204. The network interface 212 may connect to a wired network or cellular network and to a local area network or wide area network, such as the Internet, and may be used to receive and/or transmit data, including datasets such as instantiation requests or instructions, analytics task(s), datasets representing requested data or data streams acting as input data or output data, etc. In certain embodiments, multiple processors perform the functions of processor 204.

### Exemplary Embodiments:

### 1. Biomedical - Drug Development, e.g. based on an Immunology Knowledge Graph

Running biomedical experiments, such as wet lab experiments, is time and resource consuming. Predictive systems may help to determine which experiments are the most promising ones. This invention goes one step further by also providing explanations and appropriate visualization in order to show the biomedical researcher why the predictive system suggested a specific experiment next. The interactive discussion allows to filter again from a (large) set of predictions. Furthermore, via the interactive discussion, a researcher can give feedback and additional insights and information. Based on this, the system can update its known knowledge and update or re-query its predictions and explanations. As a result, the system and researcher can interactively arrive at what the most promising next experiment is. Once the experiment was conducted, the researcher can provide final feedback to the system. This information can then be used to again interactively collaborate with the researcher to derive the next step.

Input to the system: Set of known knowledge in the form of triples t = (s, r, o) where s is a subject, r is a relation and o an object. Subjects and objects are for example proteins and drugs and relations describe the relationship that holds between a subject and an object. The triples are given from an external source, e.g. a protein-drug interaction dataset. Given the set of known knowledge, a link prediction system can be trained, e.g. KBlrn (Alberto Garcia-Duran and Mathias Niepert. KBLRN: End-to-End Learning of Knowledge Base Representations with Latent, Relational, and Numerical Features. In Proceedings of the 34th Conference on Uncertainty in Artificial Intelligence (hereinafter "Garcia-Duran & Niepert, 2018"), which is incorporated herein by reference). The system can then produce a ranked list of triples, which are not part of the known knowledge set, where higher ranked triples are considered more likely by the system. With this it is, for example, possible to identify which two drugs the system considers to most likely have a negative effect when taken together. Given such a prediction, the set of known knowledge and the trained system, explanations can be generated, e.g. by using Gradient Rollback as discussed in Lawrence et al., 2021, which returns a set of known triples that most influenced the prediction. These explanation may, for example, be visualized in a graph, e.g. if the explanation is (s, r, o) and (s, r', o'), the common subject s will be a node with an edge labeled r leading to o and another edge labeled r' leading to o'.

### 2. Public Safety (NPS)

### 2.1 Relevant Information Assistant

When a police officer is dispatched, they are in need of valuable information based on the current case. Providing such information in real-time and interactively in field devices ensures that the officer is safer and they can accomplish their work with more impact. To provide relevant information in real-time, various data sources have to be aggregated and an inference module will predict the ranking of the aggregated information. At the same time, one or more explanation methods will deliver explanations for the ranking. The debater module will then choose how many of the top ranked pieces of information, why this information is important and with what type of visualization (e.g. image dispatched to a mobile screen or narrated via natural language generation) to present the most relevant information to the officer. The officer can then react to the provided information, offering their own insights and questions. In turn, the system may update its known knowledge, its ranking prediction and explanations and the debater module then decides which new information to present next. The officer may continue to interact with the system until the case is closed or the officer otherwise indicates the end of the discussion. The officer may provide final feedback once the case is closed. The information collected during the discussions may be used as an input to a system that automates report writing.

Input to the system: Set of known information about the current case, such as people, objects, historic data. This can for example be given in the form of natural language sentences which are extracted by querying underlying data sources, such as databases.

### 2.2 Identification of Hate in Documents and Common Authorship

The goal of cyber investigators is to identify hate speech on the internet. Oftentimes the author of one hate speech article may also be the author of other such articles. Additionally, hate speech authors are likely to interact with other hate speech authors. Due to the amount of data, support of predictive computer systems would provide a crucial advantage. Known knowledge can be organized as a knowledge graph as follows: Documents are linked to their authors where the relation indicates whether the author wrote hate speech in the linked document or not. Furthermore, authors can be linked to each other via various relations, e.g. when they have collaborated in a document or if they are linked in some manner on some social media site. The inference module uses link prediction (e.g. KBlrn (Garcia-Duran & Niepert, 2018).): the knowledge graph may be used to predict (1) documents likely containing hate speech (relation prediction) or (2) likely links between authors to identify groups. The explanation module explains these predictions (e.g. with the Rule Mine Engine or Gradient Rollback for the latent expert of KBlrn). The debater module then selects which predictions and explanations to present to the investigator. By reacting to the reply of the investigator, the system may update its known knowledge and update or re-query its predictions and explanations. As a result, the system can interactively support the investigator in identifying links between cases and speeding up investigations. The outcome of the interactive discussion between the system and the user can then be used as input for a digital cop assistant (bot) which monitors users on e.g. social media platforms.

Input to the system: Set of known knowledge in the form of triples t = (s, r, o) where s is a subject, r is a relation and o an object. Subjects and objects are for example authors and documents (consisting of free text) and relations describe the relationship that holds between a subject and an object.

### 2.3 Crime Prevention Assistant

The goal of the assistant is to help police officers to identify crime networks and predict likely new contacts or crimes. Utilizing a predictive system will make it possible to shift through more data than police officers could tackle on their own. A knowledge graph, where nodes are people, can be build based on both internal reports and publicly available information (e.g. social media and resulting contact information). Given a known criminal, the inference module (e.g. KBlrn) employs link prediction to identify likely crime partners. The explanation module explains these predictions (e.g. with the Rule Mine Engine or Gradient Rollback for the latent expert of KBlrn). The debater module then selects which predictions and explanations to present to the investigator. By reacting to the reply of the officer, the system may update its known knowledge and update or re-query its predictions and explanations. As a result, the system can interactively help the officer to identify hidden or unknown relationships between people. As a result, the outcome (e.g. new relationships) can be used as input to a crime hotspot prediction system for actually preventing crime.

Input to the system: Set of known knowledge in the form of triples t = (s, r, o) where s is a subject, r a relation and o an object. Subjects and objects are for example criminals, other people of interest, locations of interest and committed crimes and relations describe the relationship that holds between a subject and an object, for example (Person A, committed, Crime B) or (Crime B, happened in, location C).

### 3. Public Services - Unemployment Prediction

The system could also be used in an unemployment center to help case workers to decide what the best next activity for an unemployed person is. By iteratively interacting with the system and seeing its explanations, the case worker can derive what the next best possible activity is. The debater module enables to proactively discuss the recommendation but also to understand the advantages and disadvantages. This should also motivate the case worker to always question their own opinion. The case worker can provide final feedback on whether the activity was successful, e.g. by indicating how quickly the unemployed person found new employment. Hence, outcome can be used to adapt the system so that other case workers get improved recommendations and adapted explanations.

Input to the system: Set of known knowledge in the form of triples t = (s, r, o) where s is a subject, r a relation and o an object. Subjects and objects are for example people and activities (historic and/or current), such as a schooling course. Relations characterize how beneficial an activities is for a person or how people relate to each other.

### 4. Predictive Maintenance

The system could support maintainer of industrial machines in respect of how to prioritize necessary activities. The employee can discuss with the system the order of activities to optimize the daily routine but also to optimize the available resources and to minimize the risk of system faults. In this context, the discussion can ensure that all dependencies between system components are considered and that chains of reactions due to a fault are prevented. Hence, the outcome can be used to adjust machines to reduce the error rate of certain components but also replace parts in advance.

Input to the system: Network infrastructure of the different machines, their attributes and how they are connected.

### 5. Other Knowledge Base Completion Tasks

An embodiment, with the inference module 1 instantiated as KBlrn and the explanation method (e.g., implemented in explanation module (s) 2) as gradient rollback, is applicable to any knowledge base completion task. Such embodiment could, for example, be used for fact checking of news, fraud detection or in product recommendation systems.

In an embodiment, predictions, their explanations and possible visualization options are processed to produce the most likely explanation and output option to obtain a reply from a human user, which is then transformed into a score that indicates the truthfulness of the prediction (e.g., feedback extractor module 6 in **FIG. 1**) and from which new knowledge is extracted (module 5 in **FIG. 1**).

The system processes the extracted new knowledge and the feedback score and updates the system's known knowledge and its inference module (e.g., inference module 1 in **FIG. 1**) and output chooser module (e.g., output chooser module 4 in **FIG. 1**). A new output is selected, based on updated predictions, explanations and corresponding output options, that will most likely convince the human user by producing a counter-argument based on the feedback score extracted from the user's previous replies.

The method and the overall system take a final user reply for one debate into account in order to update the system components. In an embodiment, the system updates its set of known knowledge based on the information extracted from the knowledge extractor and utilizes the score from the feedback extractor to improve its inference module and the output chooser.

Method for convincing human users of the truthfulness of a prediction, based on different explanations and output option. Moreover, the method iteratively discusses, collaborates and updates itself based on the human users' replies and final feedback. In an embodiment, the system and process flow may include:
1) Receiving a dataset of knowledge.
2) An inference module makes a new prediction based on the given knowledge.
3) One or more explanation modules produce one or more explanations for each prediction of the inference module.
4) One or more output options are selected from the output module (e.g. a visualization technique or natural language generation module)
5) A debater module, which includes the following components:
   a. Output Chooser (module 4 in **FIG. 1**): A neural network is given predictions, explanations, output options and human user(s)' previous reply and uses this information to choose an output option, which is then displayed to the human user(s);
   b. Knowledge Extractor (module 5 in **FIG. 1**): takes the human user(s)' verbal and/or non-verbal responses and extracts knowledge from these responses which are then added to the set of known knowledge and is used to update the inference module
   c. Feedback Extractor (module 6 in **FIG. 1**): takes the human user(s)' verbal and/or non-verbal responses and assigns a score that is used to update the inference module (module 1 in **FIG. 1**), which in turn produces new predictions, explanations and output options.
   Hence, the system may iteratively process predictions, explanations, visualizations and a user's stance (previous replies or other implicit signals) as input and automatically update (a) the of known knowledge, (b) the inference module output and prediction(s) and (c) the output chooser module output in order to convince a human user of the truthfulness of the prediction(s).
6) A method to update the debater module based on the final reply of the human user. The reply is given to the knowledge and feedback extractors based on which its set of known knowledge is updated and the feedback score is used to update inference module and output chooser module.

In terms of input data, the iterative debates may lead to the following changes:
1) The system starts out with a given set of knowledge, i.e. a training set for the inference module.
2) The system outputs a prediction and an explanation via an output option chosen by the output chooser module.
3) The system receives a reply from a human user. Based on this reply, the system updates its set of knowledge, its inference module and output chooser module.
4) The system iteratively repeats Step 2 and Step 3 until the end of discussion is indicated by system or human.

Currently there are no systems that collaboratively debate predictions and their explanations with human users as well as take the learned knowledge into account to improve the explanations and the way of communication. Due to the discussion, the system personalizes to the user in order to maximize the chance of convincing the user of the truthfulness of the prediction. Compared to existing systems, a differentiator of our invention is that it is more flexible in the sense that it does not simply accept the human input but makes use of it by generating more sophisticated arguments and explanations why the prediction is actually correct.

The various embodiments can be used in many applications where AI predictions are presented to human users. For example, an embodiment can be used in any instance where knowledge graph completion can be used, such as in the public services, public safety or biomedical domains. A differentiator to common systems like chat bots is the debate aspect, i.e., the system actually offers the possibility to acknowledge that the recommendation was wrong due to missing knowledge. This may be an important factor in a lot of domains like public safety where the proudness of the human plays a key role.

One specific embodiment of the system could include:
1. Known Knowledge: A knowledge graph of interest consisting of triples t=(s, r, o)
2. Inference Module: NLE's KBlrn (Garcia-Duran & Niepert, 2018).
3. Explanation Module: NLE's Gradient Rollback (Lawrence et al., 2021)
4. Output Module:
   a. A graph visualization tool
   b. A natural language generation system (See, e.g., Attending to Future Tokens for Bidirectional Sequence Generation. Carolin Lawrence, Bhushan Kotnis, Mathias Niepert. 2019. In *Proceedings of the 2019 Conference on Empirical Methods in Natural Language Processing and the 9th International Joint Conference on Natural Language Processing (hereinafter* "Lawrence et al., 2019", which is incorporated by reference herein)
5. Output Chooser: A neural network that classifies for each output option how likely it will convince a user, then the likeliest output is chosen
6. Knowledge Extractor: A Information Extraction Pipeline for extracting new triples
7. Feedback Extractor:
   a. Sentiment Analysis model: judges how positive or negative the reply of the human user is
   b. A feedback form where the user directly gives feedback
8. An algorithm to improve the output chooser over time: based on reinforcement learning methods, e.g. following Improving a Neural Semantic Parser by Counterfactual Learning from Human Bandit Feedback. Carolin Lawrence, Stefan Riezler. In Proceedings of the 56th Annual Meeting of the Association for Computational Linguistics (ACL 2018) (hereinafter "Lawrence et al. 2018"), which is hereby incorporated by reference herein.

The above references, articles, tools, etc. are hereby incorporated by reference herein.

While embodiments of the invention have been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. An iterative artificial-intelligence (AI)-based prediction method, comprising:
receiving a dataset of knowledge;
processing the dataset of knowledge to produce one or more predictions, one or more explanations corresponding to the one or more predictions, and one or more output options;
selecting, using an AI algorithm, an output option from the one or more output options; and
presenting the selected output option to a user, the selected output option including a prediction and an explanation of the prediction.

2. The method according to claim 1, wherein the one or more output options each includes at least one of the one or more predictions and at least one of the one or more explanations.

3. The method according to claim 1 or 2, and wherein the presenting includes generating an image or text that represents a relation between the at least one of the one or more predictions and the at least one of the one or more explanations.

4. The method according to anyone of claims 1 to 3, wherein the processing the dataset of knowledge to produce one or more predictions includes processing the dataset of knowledge using a neural network having weights trained with a stochastic gradient descent (GSD) using the dataset of knowledge to produce the one or more predictions and calculate a score for each of the one or more predictions.

5. The method according to anyone of claims 1 to 4, wherein the processing the dataset of knowledge to produce one or more explanations includes processing the dataset of knowledge the one or more predictions and the scores for each of the one or more predictions to derive the one or more explanations.

6. The method of anyone of claims to 5, wherein the processing the dataset of knowledge to produce one or more output options includes processing the one or more derived explanations and the one or more predictions to derive relations between the one or more derived explanations and the one or more predictions and produce the output options, each output option including a relation between a derived explanation and a prediction.

7. The method of anyone of claims 1 to 6, wherein the selecting, using an artificial intelligence algorithm, an output option includes:
processing the one or more predictions, the one or more derived explanations and the one or more output options using a neural network to calculate a score for each of the one or more output options; and
selecting, based on a selection policy and the score for each of the one or more output options, one of the one or more output options to be presented to the user.

8. The method of anyone of claims 1 to 7, further including:
receiving a reply including feedback information from the user; and
processing the feedback information to determine a new or revised output option for presentation to the user.

9. The method of claim 8, wherein the processing the feedback information to determine a new or revised output option for presentation to the user includes:
processing the feedback information to extract new knowledge;
adding the new knowledge to the dataset of knowledge; and
calculating a feedback score for the feedback information.

10. The method of claim 9, wherein the steps of processing and selecting are updated based on the feedback score.

11. The method of anyone of claims 1 to 10, wherein the presenting the selected output option to a user includes displaying a visualization of a relation between the prediction and the explanation and/or generating a natural language sentence that includes the prediction, the explanation and the relation.

12. An iterative artificial-intelligence (AI)-based prediction system, comprising:
one or more processors; and a memory storing instructions, which when executed by the one or more processors cause the system to:
receive a data set of knowledge;
process the dataset of knowledge to produce one or more predictions, one or more explanations corresponding to the one or more predictions, and one or more output options;
select, using an AI algorithm, an output option from the one or more output options; and
present the selected output option to a user on a display device, the selected output option including a prediction and an explanation of the prediction.

13. The system of claim 12, wherein the instructions to process include instructions to:
process the dataset of knowledge using a neural network having weights trained with a stochastic gradient descent (GSD) using the dataset of knowledge to produce the one or more predictions and calculate a score for each of the one or more predictions;
process the dataset of knowledge the one or more predictions and the scores for each of the one or more predictions to derive the one or more explanations; and
process the one or more derived explanations and the one or more predictions to derive relations between the one or more derived explanations and the one or more predictions and produce the output options, each output option including a relation between a derived explanation and a prediction; and
wherein the instructions to select include instructions to:
process the one or more predictions, the one or more derived explanations and the one or more output options using a neural network to calculate a score for each of the one or more output options; and
select, based on a selection policy and the score for each of the one or more output options, one of the one or more output options to be presented to the user.

14. The system of claim 12 or 13, wherein the instructions further include instructions, which when executed by the one or more processors, cause the system to:
receive a reply including feedback information from the user; and
process the feedback information to determine a new or revised output option for presentation to the user, by
processing the feedback information to extract new knowledge;
adding the new knowledge to the dataset of knowledge; and
calculating a feedback score for the feedback information, wherein the feedback score is used to update processing and selecting in a next iteration.

15. A tangible, non-transitory computer-readable medium having instructions thereon which, upon being executed by one or more processors, alone or in combination, provide for execution of an iterative artificial-intelligence (AI)-based prediction method, the method comprising:
receiving a data set of knowledge;
processing the dataset of knowledge to produce one or more predictions, one or more explanations corresponding to the one or more predictions, and one or more output options;
selecting, using an AI algorithm, an output option from the one or more output options; and
presenting the selected output option to a user, the selected output option including a prediction and an explanation of the prediction.
